# EUROPÄISCHE PATENTSCHRIFT

(11) **EP 3 591 169 B1**
(45) Veröffentlichungstag und Bekanntmachung des Hinweises auf die Patenterteilung: **13.10.2021**
(21) Anmeldenummer: 19183989.3
(22) Anmeldetag: 02.07.2019
(51) Int. Cl.: F01D 5/28

(54) **VERFAHREN ZUM HERSTELLEN EINER SCHAUFEL FÜR EINE GASTURBINE**
METHOD OF MANUFACTURING OF A BLADE FOR A GAS TURBINE
PROCÉDÉ DE FABRICATION D'UNE AUBE POUR UNE TURBINE À GAZ

(30) Priorität: 06.07.2018 DE 102018211193
(43) Veröffentlichungstag der Anmeldung: 08.01.2020
(73) Patentinhaber: MTU Aero Engines AG, 80995 München (DE)
(72) Erfinder: Böck, Alexander, 82288 Kottgeisering (DE)

(56) Entgegenhaltungen:
- EP-A1- 0 526 057
- EP-A1- 3 339 574
- WO-A1-2015/073852
- US-B2- 8 357 323

## Beschreibung

Die vorliegende Erfindung betrifft ein Verfahren zum Herstellen einer Schaufel für eine Gasturbine, insbesondere eines Flugtriebwerks.

Beispiele für Schaufeln sind aus den Dokumenten WO2015073852A1 und EP3339574A1 bekannt.

Eine Aufgabe einer Ausführung der vorliegenden Erfindung ist es, eine Gasturbinenschaufel und ein Verfahren zum Herstellen einer Gasturbinenschaufel zu verbessern.

Diese Aufgabe wird durch ein Verfahren mit den Merkmalen des Anspruchs 1 gelöst. Vorteilhafte Ausführungsformen der Erfindung sind Gegenstand der Unteransprüche.

Nach einer Ausführung der vorliegenden Erfindung wird (wenigstens) eine Schaufel für eine, insbesondere (wenigstens) einer, Turbinen- und/oder Verdichterstufe für eine, insbesondere einer, Gasturbine, insbesondere eines Flugtriebwerks, insbesondere ihr Schaufelblatt, Schaufelfuß und/oder eine schaufelfussseitige und/oder schaufelfblattspitzenseitige Schaufelplattform, vollständig oder teilweise aus keramischem Faserverbundwerkstoff bzw. mit mehreren übereinander angeordneten Gewebelagen hergestellt.

Der keramische Faserverbundwerkstoff ("Ceramic Matrix Composite", CMC) weist in einer Ausführung eine Matrix, die in einer Ausführung Keramik, insbesondere Aluminiumoxid, Siliciumcarbid oder dergleichen, aufweist, auf, in die ein Fasergewebe mit Fasern bzw. Faserbündeln eingebettet ist bzw. wird, die in einer Ausführung Keramik, insbesondere Aluminiumoxid, Siliciumcarbid oder dergleichen, aufweisen. Faserbündel des Fasergewebes, sogenannte Stränge bzw. Rovings, weisen in einer Ausführung mehrere, insbesondere parallel angeordnete, Filamente bzw. (Einzel)Fasern und/oder einen, insbesondere maximalen, minimalen oder mittleren, Durchmesser von wenigstens 1 mm und/oder höchstens 10 mm, insbesondere höchstens 5 mm, auf.

Die vorliegende Erfindung ist aufgrund der Betriebsbedingungen insbesondere für Leit- und Laufschaufeln von Turbinenstufen geeignet, die entsprechend eine besonders vorteilhafte Anwendung darstellen. Durch die Verwendung von keramischem Faserverbundwerkstoff können in einer Ausführung vorteilhaft leichte(re) und/oder mechanisch und/oder thermisch feste(re) Schaufeln zur Verfügung gestellt werden.

Nach der vorliegenden Erfindung weisen ein oder mehrere **P**aare aufeinander angeordneter Gewebelagen (jeweils) eine erste Gewebelage, die wenigstens eine erste Unterbrechungsstelle zwischen zwei einander zugewandten ersten Kanten dieser Gewebelage aufweist, und eine zweite Gewebelage auf, die wenigstens eine der ersten Unterbrechungsstelle benachbarte bzw. nächstliegende zweite Unterbrechungsstelle zwischen zwei einander zugewandten zweiten Kanten der zweiten Gewebelage aufweist.

Die ersten Kanten stoßen in einer Ausführung an bzw. in der ersten Unterbrechungsstelle aneinander an, so dass die erste Unterbrechungsstelle einen Stoß bzw. eine Stoßstelle in der ersten Gewebelage bildet. Zusätzlich oder alternativ stoßen in einer Ausführung die zweiten Kanten an bzw. in der zweiten Unterbrechungsstelle aneinander an, so dass die zweite Unterbrechungsstelle einen Stoß bzw. eine Stoßstelle in der zweiten Gewebelage bildet. Hierdurch kann in einer Ausführung vorteilhaft ein besonders stabiler Faserverbundwerkstoff hergestellt werden.

Gleichermaßen können die ersten Kanten an der ersten Unterbrechungsstelle und/oder die zweiten Kanten an der zweiten Unterbrechungsstelle voneinander beabstandet sein oder einander überlappen. In einer Ausführung ist die (erste bzw. zweite) Unterbrechungsstelle die Mittellinie zwischen den beiden (ersten bzw. zweiten) Kanten.

Nach einer Ausführung der vorliegenden Erfindung ist die zweite Unterbrechungsstelle von bzw. relativ zu der ersten bzw. gegen die erste Unterbrechungsstelle versetzt, in einer Ausführung in Flächenrichtung der Gewebelagen bzw. senkrecht zu deren Wandstärke und/oder um wenigstens das 1,5-fache, vorzugsweise wenigstens das Doppelte, eines, insbesondere maximalen, minimalen oder mittleren, Durchmessers eines der ersten Unterbrechungsstelle benachbarten bzw. nächstliegenden Faserbündels der ersten Gewebelage.

In einer Ausführung bilden mehrere, insbesondere aufeinander angeordnete, Gewebelagen jeweils paarweise ein solches Paar. Mit anderen Worten sind in einer Ausführung die einander benachbarten bzw. nächstliegenden Unterbrechungsstellen von mehreren, insbesondere wenigstens drei, in einer Ausführung wenigstens vier, vorzugsweise wenigstens fünf, aufeinander angeordneten Gewebelagen jeweils paarweise, in einer Ausführung in derselben Richtung, gegeneinander versetzt, in einer Ausführung in Flächenrichtung der Gewebelagen bzw. senkrecht zu deren Wandstärke und/oder um (jeweils) wenigstens das 1,5-fache, vorzugsweise (jeweils) wenigstens das Doppelte, eines, insbesondere maximalen, minimalen oder mittleren, Durchmessers eines der jeweiligen ersten Unterbrechungsstelle benachbarten bzw. nächstliegenden Faserbündels der jeweiligen ersten Gewebelage.

Hierdurch kann in einer Ausführung vorteilhaft ein besonders stabiler Faserverbundwerkstoff hergestellt werden.

In einer Ausführung weist die erste Gewebelage des Paares bzw. eines oder mehrerer der Paare (jeweils) wenigstens einen ersten Gewebezuschnitt, der wenigstens eine der beiden ersten Kanten aufweist bzw. bildet, und die zweite Gewebelage dieses Paares (jeweils) wenigstens einen zweiten Gewebezuschnitt auf, der wenigstens eine der beiden zweiten Kanten aufweist bzw. bildet, wobei der erste Gewebezuschnitt und/oder der zweite Gewebezuschnitt (jeweils) eine Fläche von wenigstens 100 mm², insbesondere wenigstens 200 mm², und/oder höchstens 1·10⁴ mm², insbesondere höchstens 2500 mm², aufweist.

(Erst) durch den Einsatz solcher kleinflächigen Gewebezuschnitte können insbesondere Schaufeln mit kleine(re)n Abmessungen und/oder komplexen Geometrien vorteilhaft, insbesondere prozesssicher und/oder strukturell stabil, hergestellt werden.

Allerdings sind solche kleinflächigen Gewebezuschnitte bei der Herstellung des Faserverbundwerkstoffes schwierig handzuhaben. So besteht etwa ein Gewebezuschnitt von 15 mm × 15 mm bei einem Faserbündeldurchmesser, der im Bereich von 3 mm, liegt, nur aus 5 nebeneinander angeordneten Faserbündeln, die 5 nebeneinander angeordnete Faserbündeln kreuzen, so dass die Randfaserbündel leicht ausfallen können bzw. der Gewebezuschnitt leicht ausfranst bzw. auseinander- bzw. zerfällt.

Daher werden bzw. sind in einer bevorzugten Ausführung die beiden Gewebezuschnitte der ersten und zweiten Gewebelage des bzw. eines oder mehrerer der Paare (jeweils) miteinander vernäht. Sofern mehrere, insbesondere aufeinander angeordnete, Gewebelagen jeweils paarweise ein solches Paar mit der (jeweiligen) ersten Gewebelage mit dem (jeweiligen) ersten Gewebezuschnitt und der (jeweiligen) zweiten Gewebelage mit dem (jeweiligen) zweiten Gewebezuschnitt bilden, werden bzw. sind in einer bevorzugten Ausführung drei oder mehr dieser Gewebezuschnitte bzw. der erste und zweite Gewebezuschnitt von zwei oder mehr der Paar alle, insbesondere gemeinsam, miteinander vernäht.

Hierdurch kann in einer Ausführung die Handhabung bei der Herstellung der Schaufel verbessert, ja bei kleinen Gewebezuschnitten gegebenenfalls erst ermöglicht werden. Entsprechend beruht ein Aspekt der vorliegenden Erfindung auf der Idee, dass durch das Vernähen sowie den Versatz der Unterbrechungsstellen auch kleine Gewebezuschnitte unter 1·10⁴ mm zur, insbesondere wenigstens teilweise automatisierten, Herstellung von Gasturbinenschaufeln aus keramischem Faserverbundwerkstoff verwendet werden können.

Nach einer Ausführung der vorliegenden Erfindung weist ein Verfahren zum Herstellen, insbesondere Vorformen, einer hier beschriebenen Schaufel die Schritte auf:
- Bereitstellen, insbesondere Zuschneiden des bzw. der ersten und zweiten Gewebezuschnitts/-e, in einer Ausführung mithilfe eines ersten Automaten;
- Anordnen des bzw. der ersten und zweiten Gewebezuschnitts/-e aufeinander derart, dass bei in eine Form, insbesondere Kokille, eingelegter/-n erster/-n und zweiter/-n Gewebelage(n) die zweite(n) Unterbrechungsstelle(n) von der bzw. den ersten Unterbrechungsstelle(n jeweils), insbesondere um wenigstens das 1,5fache eines Durchmessers eines der (jeweiligen) ersten Unterbrechungsstelle benachbarten Faserbündels der (jeweiligen) ersten Gewebelage, versetzt ist/sind, in einer Ausführung mithilfe des ersten oder eines zweiten Automaten;
- Vernähen des bzw. der ersten und zweiten Gewebezuschnitts/-e miteinander, in einer Ausführung mithilfe des ersten oder zweiten oder eines weiteren Automaten;
- Einlegen, insbesondere manuelles Einlegen, der miteinander vernähten Gewebezuschnitte in die Form; und
- Herstellen, insbesondere Vorformen, des keramischen Faserverbundwerkstoffes mit den in die Form eingelegten, miteinander vernähten Gewebezuschnitten, in einer Ausführung durch Einbetten der miteinander vernähten Gewebezuschnitte in eine(r) bzw. die Matrix.

Durch die Verwendung von, insbesondere demselben, Automaten zum Zuschneiden und/oder Anordnen ("Zuschneide- und/oder Legeautomat") und/oder Automaten zum Vernähen kann die Herstellung vorteilhaft (teil)automatisiert werden. Wird dies mit einem bevorzugten manuellen Einlegen in die Form kombiniert, können vorteilhaft sowohl bei der (Vor)Fixierung der Gewebelagen aufeinander als auch beim Einlegen in die Form eine höhere Präzision realisiert werden.

In einer Ausführung umgreifen die in die Form eingelegten, miteinander vernähten Gewebezuschnitte wenigstens teilweise einen Kern, der in einer Weiterbildung nach dem Herstellen des keramischen Faserverbundwerkstoffes entfernt wird, insbesondere durch Herausziehen, Zerstören und/oder Schrumpfen.

Hierdurch können vorteilhaft Hohlschaufeln mit geringe(re)m Gewicht hergestellt werden.

In einer Ausführung werden die Gewebezuschnitte, insbesondere mithilfe eines Automaten, mit dem Kern vernäht.

Hierdurch kann in einer Ausführung die Handhabung bei der Herstellung und/oder die Festigkeit der Schaufel verbessert werden.

Weitere vorteilhafte Weiterbildungen der vorliegenden Erfindung ergeben sich aus den Unteransprüchen und der nachfolgenden Beschreibung bevorzugter Ausführungen. Hierzu zeigt, teilweise schematisiert:
- Fig. 1: die Herstellung einer Schaufel nach einer Ausführung der vorliegenden Erfindung in einem Schnitt senkrecht zu einer Schaufellängsachse;
- Fig. 2: mehrere Gewebelagen bzw. -zuschnitte der Schaufel in einer Draufsicht;
- Fig. 3: die Herstellung der Schaufel in einem Schnitt senkrecht zur Fig. 1;
- Fig. 4: eine Draufsicht auf miteinander vernähte Gewebezuschnitte der Schaufel; und
- Fig. 5: einen von den Gewebezuschnitten umgriffenen und mit diesen vernähten Kern.

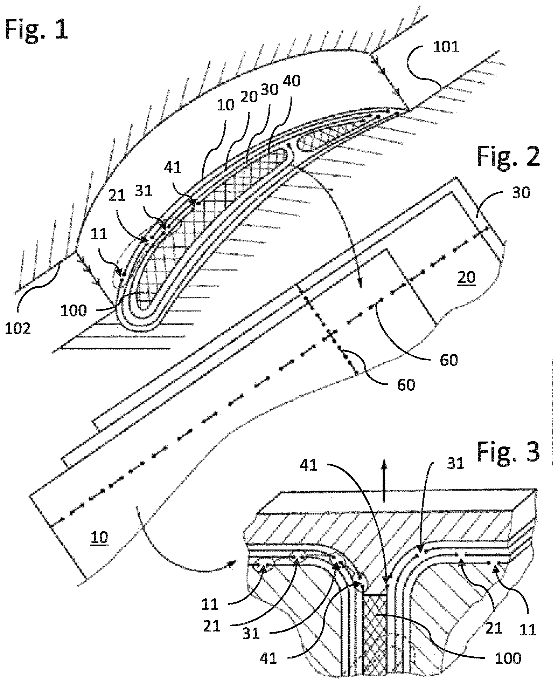

Fig. 1 zeigt die Herstellung einer Schaufel nach einer Ausführung der vorliegenden Erfindung in einem Schnitt senkrecht zu einer Schaufellängsachse.

Hierzu werden zunächst Gewebe für einen keramischen Faserverbundwerkstoff durch einen Automaten (nicht dargestellt) zugeschnitten, die Gewebezuschnitte durch denselben Automaten aufeinandergelegt, und anschließend durch diesen oder einen anderen Automaten vernäht.

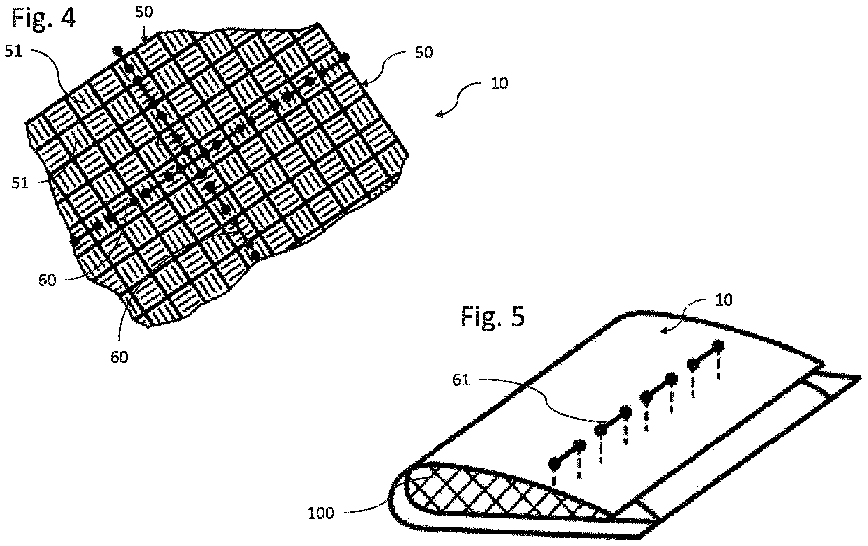

Hierzu zeigt Fig. 4 eine Draufsicht auf einen Ausschnitt miteinander vernähter Gewebezuschnitte, in der die Faserbündel 50, die das Gewebe bzw. dessen Gewebelagen bilden, die Filamente bzw. (Einzel)Fasern 51, aus denen diese Faserbündel 50 bestehen, sowie die (Fixier)Nähte 60 angedeutet sind. In dem Ausschnitt der Fig. 4 ist nur eine obere Gewebelage mit einem Gewebezuschnitt 10 zu sehen, in der Draufsicht der Fig. 2 hingegen drei der aufeinander angeordneten Gewebelagen bzw. -zuschnitte 10, 20, 30 mit den (Fixier)Nähten 60, mit denen diese miteinander vernäht sind.

Diese miteinander vernähten Gewebelagen bzw. -zuschnitte 10, 20, 30 werden um einen Kern 100 geschlungen und mit diesem mittels (Fixier)Nähten 61 vernäht, wie in Fig. 5 angedeutet.

Anschließend werden der Kern 100 und die diesen umgreifenden und mit ihm sowie miteinander vernähten Gewebelagen bzw. -zuschnitte 10, 20, 30 in eine Kokille 101, 102 eingelegt und diese geschlossen, wie in Fig. 1 durch Schließpfeile angedeutet.

In diesem Zustand sind benachbarte Unterbrechungsstellen zwischen Kanten 11, 21, 31, 41 aufeinander angeordneter Gewebelagen bzw. -zuschnitte 10, 20, 30 bzw. 40 senkrecht zur Wandstärke der Gewebelagen von- bzw. gegeneinander versetzt, so dass sich eine Kette von- bzw. gegen- bzw. zueinander versetzter Unterbrechungsstellen zwischen den Kanten 11, 21, 31, 41 ergibt, die in Fig. 3 hervorgehoben dargestellt ist.

Die Gewebelagen bzw. -zuschnitte werden durch den Zuschneide- und Legeautomaten bereits so aufeinandergelegt (und durch diesen bzw. den anderen Automaten miteinander vernäht), dass in dem in Fig. 1, 3 gezeigten Zustand jeweils Paare (10, 20), (20, 30) bzw. (30, 40) aufeinander angeordneter Gewebelagen jeweils eine erste Gewebelage 10, 20 bzw. 30, die wenigstens eine erste Unterbrechungsstelle zwischen zwei einander zugewandten ersten Kanten 11, 21 bzw. 31 dieser Gewebelage aufweist, und eine zweite Gewebelage 20, 30 bzw. 40 aufweisen, die wenigstens eine der ersten Unterbrechungsstelle benachbarte zweite Unterbrechungsstelle zwischen zwei einander zugewandten zweiten Kanten 21, 31 bzw. 41 der zweiten Gewebelage aufweist, die von der ersten Unterbrechungsstelle (jeweils in derselben Richtung) versetzt ist.

In diesem Zustand wird ein keramischer Faserverbundwerkstoff mit den in die Kokille eingelegten, miteinander vernähten Gewebezuschnitten und dadurch eine Schaufel hergestellt, insbesondere mittels eines Al-, Si- und/oder C-Atome enthaltenden Polymers oder dergleichen.

Anschließend wird die Kokille geöffnet und die Schaufel entnommen, wie durch den Ausziehrichtungspfeil in Fig. 3 angedeutet. Mittels Pyrolyse oder Brennen kann die CMC-Schaufel dann fertiggestellt werden.

Obwohl in der vorhergehenden Beschreibung exemplarische Ausführungen erläutert wurden, sei darauf hingewiesen, dass eine Vielzahl von Abwandlungen möglich ist. Außerdem sei darauf hingewiesen, dass es sich bei den exemplarischen Ausführungen lediglich um Beispiele handelt, die den Schutzbereich, die Anwendungen und den Aufbau in keiner Weise einschränken sollen. Vielmehr wird dem Fachmann durch die vorausgehende Beschreibung ein Leitfaden für die Umsetzung von mindestens einer exemplarischen Ausführung gegeben, wobei diverse Änderungen, insbesondere in Hinblick auf die Funktion und Anordnung der beschriebenen Bestandteile, vorgenommen werden können, ohne den Schutzbereich zu verlassen, wie er sich aus den Ansprüchen und diesen äquivalenten Merkmalskombinationen ergibt.

### Bezugszeichenliste

- 10, 20, 30, 40: Gewebelage bzw. -zuschnitt
- 11, 21, 31, 41: (Unterbrechungsstelle zwischen) einander zugewandte(n) Kanten
- 50: Faserbündel
- 51: Filament; (Einzel)Faser
- 60, 61: (Fixier)Naht
- 100: Kern
- 101, 102: Kokille

## Patentansprüche

1. Verfahren zum Herstellen einer Schaufel für eine Gasturbine, insbesondere eines Flugtriebwerks, wobei die Schaufel wenigstens teilweise aus keramischem Faserverbundwerkstoff mit mehreren übereinander angeordneten Gewebelagen (10, 20, 30, 40) hergestellt ist, wobei wenigstens ein Paar aufeinander angeordneter Gewebelagen (10, 20) eine erste Gewebelage (10), die wenigstens eine erste Unterbrechungsstelle zwischen zwei einander zugewandten ersten Kanten (11) dieser Gewebelage aufweist, und eine zweite Gewebelage (20) aufweist, die wenigstens eine der ersten Unterbrechungsstelle (11) benachbarte zweite Unterbrechungsstelle zwischen zwei einander zugewandten zweiten Kanten (21) der zweiten Gewebelage aufweist, die von der ersten Unterbrechungsstelle (11) versetzt ist, wobei die erste Gewebelage wenigstens einen ersten Gewebezuschnitt (10), der wenigstens eine der beiden ersten Kanten aufweist, aufweist und die zweite Gewebelage wenigstens einen zweiten Gewebezuschnitt (20), der wenigstens eine der beiden zweiten Kanten aufweist, aufweist, wobei das Verfahren die folgenden Schritte umfasst:
- Bereitstellen des ersten und zweiten Gewebezuschnitts (10, 20);
- Anordnen des ersten und zweiten Gewebezuschnitts aufeinander derart, dass bei in eine Form (101, 102) eingelegter erster und zweiter Gewebelage die zweite Unterbrechungsstelle (21) von der ersten Unterbrechungsstelle (11) versetzt ist;
- Vernähen (60, 61) des ersten und zweiten Gewebezuschnitts miteinander;
- Einlegen der miteinander vernähten Gewebezuschnitte in die Form; und
- Herstellen des keramischen Faserverbundwerkstoffes mit den in die Form eingelegten, miteinander vernähten Gewebezuschnitten.

2. Verfahren nach dem vorhergehenden Anspruch, **dadurch gekennzeichnet, dass** wenigstens einer der beiden Gewebezuschnitte eine Fläche von wenigstens 100 mm² aufweist

3. Verfahren nach Anspruch 1, **dadurch gekennzeichnet, dass** wenigstens einer der beiden Gewebezuschnitte eine Fläche von höchstens 1·10⁴ mm² aufweist.

4. Verfahren nach Anspruch 1, **dadurch gekennzeichnet, dass** wenigstens einer der beiden Gewebezuschnitte eine Fläche von wenigstens 100 mm² und höchstens 1·10⁴ mm² aufweist.

5. Verfahren nach einem der vorhergehenden Ansprüche, **dadurch gekennzeichnet, dass** bei der Schaufel die zweite Unterbrechungsstelle von der ersten Unterbrechungsstelle um wenigstens das 1,5-fache eines Durchmessers eines der ersten Unterbrechungsstelle benachbarten Faserbündels (50) der ersten Gewebelage versetzt ist.

6. Verfahren nach einem der vorhergehenden Ansprüche, wobei die Schaufel für eine Turbinen- oder Verdichterstufe für eine Gasturbine bestimmt ist.

7. Verfahren nach einem der vorhergehenden Ansprüche, wobei:
- das Bereitstellen ein Zuschneiden des ersten und zweiten Gewebezuschnitts (10, 20) umfasst und/oder mithilfe eines ersten Automaten erfolgt;
- das Anordnen des ersten und zweiten Gewebezuschnitts aufeinander derart erfolgt, dass bei in eine Form (101, 102) eingelegter erster und zweiter Gewebelage die zweite Unterbrechungsstelle (21) von der ersten Unterbrechungsstelle (11) um wenigstens das 1,5fache eines Durchmessers eines der ersten Unterbrechungsstelle benachbarten Faserbündels (50) der ersten Gewebelage versetzt ist und/oder mithilfe des ersten oder eines zweiten Automaten erfolgt;
- das Vernähen (60, 61) des ersten und zweiten Gewebezuschnitts miteinander mithilfe des ersten oder zweiten oder eines weiteren Automaten erfolgt; und/oder
- das Einlegen der miteinander vernähten Gewebezuschnitte in die Form ein manuelles Einlegen ist.

8. Verfahren nach einem der vorhergehenden Ansprüche, **dadurch gekennzeichnet, dass** die in die Form eingelegten, miteinander vernähten Gewebezuschnitte wenigstens teilweise einen Kern (100) umgreifen.

9. Verfahren nach dem vorhergehenden Anspruch, **dadurch gekennzeichnet, dass** die Gewebezuschnitte, insbesondere mithilfe eines Automaten, mit dem Kern vernäht werden (61).

## Claims

1. Method for manufacturing a blade for a gas turbine, in particular of an aircraft engine, wherein the blade is manufactured at least in part from ceramic fiber composite material comprising a plurality of fabric layers (10, 20, 30, 40) arranged one above the other, wherein at least one pair of fabric layers (10, 20) arranged one on top of the other comprises a first fabric layer (10) which has at least one first interruption point between two mutually facing first edges (11) of this fabric layer, and a second fabric layer (20) which has at least one second interruption point that is adjacent to the first interruption point (11) and between two mutually facing second edges (21) of the second fabric layer and is offset from the first interruption point (11), wherein the first fabric layer comprises at least one first fabric cut piece (10) having at least one of the two first edges, and the second fabric layer comprises at least one second fabric cut piece (20) having at least one of the two second edges, wherein the method comprises the following steps:
- providing the first and second fabric cut pieces (10, 20);
- arranging the first and second fabric cut pieces one on top of the other in such a way that, when the first and second fabric layers are inserted into a mold (101, 102), the second interruption point (21) is offset from the first interruption point (11);
- sewing (60, 61) the first and second fabric cut pieces together;
- inserting the fabric cut pieces which have been sewn together into the mold; and
- manufacturing the ceramic fiber composite material using the fabric cut pieces which have been inserted into the mold and sewn together.

2. Method according to the preceding claim, **characterized in that** at least one of the two fabric cut pieces has an area of at least 100 mm².

3. Method according to claim 1, **characterized in that** at least one of the two fabric cut pieces has an area of at most 1·10⁴ mm².

4. Method according to claim 1, **characterized in that** at least one of the two fabric cut pieces has an area of at least 100 mm² and at most 1·10⁴ mm².

5. Method according to any of the preceding claims, **characterized in that,** in the blade, the second interruption point is offset from the first interruption point by at least 1.5 times a diameter of a fiber bundle (50) of the first fabric layer, which fiber bundle is adjacent to the first interruption point.

6. Method according to any of the preceding claims, wherein the blade is intended for a turbine stage or compressor stage for a gas turbine.

7. Method according to any of the preceding claims, wherein:
- the step of providing comprises cutting out the first and second fabric cut pieces (10, 20) and/or takes place by means of a first machine;
- the first and second fabric cut pieces are arranged one on top of the other in such a way that, when the first and second fabric layers are inserted into a mold (101, 102), the second interruption point (21) is offset from the first interruption point (11) by at least 1.5 times a diameter of a fiber bundle (50) of the first fabric layer, which fiber bundle is adjacent to the first interruption point, and/or this step of arranging takes place by means of the first or a second automatic machine;
- the first and second fabric cut pieces are sewn (60, 61) together by means of the first or second or a further automatic machine; and/or
- the fabric cut pieces which have been sewn together are inserted into the mold manually.

8. Method according to any of the preceding claims, **characterized in that** the fabric cut pieces which have been inserted into the mold and sewn together at least partially surround a core (100).

9. Method according to the preceding claim, **characterized in that** the fabric cut pieces are sewn (61) to the core, in particular by means of an automatic machine.

## Revendications

1. Procédé de fabrication d'une aube pour une turbine à gaz, en particulier pour un moteur d'aéronef, dans lequel l'aube est au moins partiellement fabriquée en matériau composite fibreux céramique comportant plusieurs couches de tissu (10, 20, 30, 40) superposées, dans lequel au moins une paire de couches de tissu (10, 20) superposées comporte une première couche de tissu (10), laquelle comporte au moins un premier point d'interruption entre deux premiers bords (11) de ladite couche de tissu se faisant face l'un à l'autre, et une seconde couche de tissu (20), laquelle comporte au moins un second point d'interruption adjacent au premier point d'interruption (11) entre deux seconds bords (21) de la seconde couche de tissu se faisant face l'un à l'autre, ledit second point d'interruption étant décalé par rapport au premier point d'interruption (11), dans lequel la première couche de tissu comporte au moins une première découpe de tissu (10), laquelle comporte au moins l'un des deux premiers bords, et la seconde couche de tissu comporte au moins une seconde découpe de tissu (20), laquelle comporte au moins l'un des deux seconds bords, dans lequel le procédé comprend les étapes suivantes :
- la fourniture des première et seconde découpes de tissu (10, 20) ;
- la disposition des première et seconde découpes de tissu l'une sur l'autre de telle sorte que lorsque les première et seconde découpes de tissu sont insérées dans un moule (101, 102), le second point d'interruption (21) est décalé par rapport au premier point d'interruption (11) ;
- la couture (60, 61) des première et seconde découpes de tissu l'une avec l'autre ;
- L'insertion des découpes de tissu cousues l'une avec l'autre dans le moule ; et
- la fabrication du matériau composite fibreux céramique comportant les découpes de tissu insérées dans le moule et cousues l'une avec l'autre.

2. Procédé selon la revendication précédente, **caractérisé en ce que** l'au moins une des deux découpes de tissu présente une surface d'au moins 100 mm².

3. Procédé selon la revendication 1, **caractérisé en ce que** l'au moins une des deux découpes de tissu présente une surface d'au plus 1·10⁴ mm².

4. Procédé selon la revendication 1, **caractérisé en ce que** l'au moins une des deux découpes de tissu présente une surface d'au moins 100 mm² et d'au plus 1·10⁴ mm².

5. Procédé selon l'une quelconque des revendications précédentes, **caractérisé en ce qu'**au niveau de l'aube, le second point d'interruption est décalé par rapport au premier point d'interruption d'au moins 1,5 fois le diamètre d'un faisceau de fibres (50) de la première couche de tissu adjacent au premier point d'interruption.

6. Procédé selon l'une quelconque des revendications précédentes, dans lequel l'aube est destinée à un étage de turbine ou de compresseur pour une turbine à gaz.

7. Procédé selon l'une quelconque des revendications précédentes, dans lequel :
- la fourniture comprend une découpe des première et seconde découpes de tissu (10, 20) et/ou s'effectue à l'aide d'un premier dispositif automatique ;
- l'agencement des première et seconde découpes de tissu l'une sur l'autre s'effectue de telle sorte que lors de l'insertion des première et seconde découpes de tissu dans un moule (101, 102), le second point d'interruption (21) est décalé par rapport au premier point d'interruption (11) d'au moins 1,5 fois le diamètre d'un faisceau de fibres (50) de la première couche de tissu adjacent au premier point d'interruption et/ou s'effectue à l'aide du premier dispositif automatique ou d'un deuxième dispositif automatique ;
- la couture (60, 61) des première et seconde découpes de tissu l'une avec l'autre s'effectue à l'aide de la première ou ddu deuxième ou d'un autre dispositif automatique ; et/ou
- l'insertion des découpes de tissu cousues l'une avec l'autre dans le moule est une insertion manuelle.

8. Procédé selon l'une quelconque des revendications précédentes, **caractérisé en ce que** les découpes de tissu insérées dans le moule et cousues l'une avec l'autre entourent au moins partiellement une âme (100).

9. Procédé selon la revendication précédente, **caractérisé en ce que** les découpes de tissu sont cousues à l'âme (61), en particulier à l'aide d'un dispositif automatique.
